# FASCICULE DE BREVET EUROPEEN

(11) **EP 4 347 390 B1**
(45) Date de publication et mention de la délivrance du brevet: **24.09.2025**
(21) Numéro de dépôt: 22731747.6
(22) Date de dépôt: 23.05.2022
(51) Int. Cl.: B64C 11/38, B64C 11/44, F01D 7/00

(54) **MÉCANISME DE CHANGEMENT DE PAS COMPRENANT UN ACTIONNEUR ÉLECTROHYDRAULIQUE AMÉLIORÉ**
BLATTWINKELVERÄNDERUNGSMECHANISMUS MIT EINEM VERBESSERTEN ELEKTROHYDRAULISCHEN STELLGLIED
PITCH CHANGE MECHANISM COMPRISING AN IMPROVED ELECTROHYDRAULIC ACTUATOR

(30) Priorité: 28.05.2021 FR 2105562
(43) Date de publication de la demande: 10.04.2024
(73) Titulaire: SAFRAN AIRCRAFT ENGINES, 75015 Paris (FR)
(72) Inventeur: DE WERGIFOSSE, Huguette, 77550 MOISSY-CRAMAYEL (FR)
(74) Mandataire: Regimbeau
(86) Numéro de dépôt international: PCT/FR2022/050971
(87) Numéro de publication internationale: WO 2022/248799

(56) Documents cités:
- EP-A1- 1 306 558
- EP-A1- 1 306 560
- CH-A- 514 790
- US-A1- 2014 193 261
- US-A1- 2018 128 289

## Description

### DOMAINE TECHNIQUE GENERAL

L'invention concerne le domaine des turbomachines comprenant une hélice ou une soufflante à calage variable. Plus précisément, l'invention porte sur un système d'actionnement du pas d'une hélice ou d'une soufflante d'une telle turbomachine.

### ETAT DE L'ART

Différentes architectures de turbomachine ont recours à une hélice (turbopropulseur, open rotor) ou une soufflante (turboréacteur) à calage variable. Cette variabilité permet à la turbomachine de s'adapter aux conditions de vol variables en maintenant un angle d'incidence de l'air favorable sur les pales. La variabilité du calage est particulièrement nécessaire pour les rotors ayant un faible taux de compression, comme les hélices de turbopropulseurs et les soufflantes de turbomachines ayant un taux de dilution (rapport entre le débit du flux secondaire (froid) et le débit du flux primaire (qui traverse le corps primaire)) élevé.

Des mécanismes de changement de pas multiples ont été imaginés pour faire varier le calage des pales d'une hélice ou d'une soufflante. Ces mécanismes comportent généralement une mise en rotation de la pale autour de son axe principal par l'intermédiaire d'une bielle actionnée par un vérin. Le vérin est alimenté en fluide hydraulique (par exemple de l'huile) en provenance d'un groupe de lubrification de la turbomachine, la variation de la pression de fluide hydraulique délivrée permettant de faire varier le pas des pales. Afin de transférer l'alimentation en fluide hydraulique du mécanisme de changement de pas d'un repère fixe (groupe de lubrification) de la turbomachine à un repère tournant (de la soufflante), on utilise généralement un OTB (acronyme anglais de Oil Transfer Bearing, pour joint hydraulique tournant multi-passage ou transfert d'huile tournant). De manière connue en soi, l'OTB comprend une partie fixe par rapport à une partie stator de la turbomachine et qui est connectée, via des canalisations dédiées, au groupe de lubrification comprenant un réservoir d'huile et une pompe, et une partie tournante qui est solidaire en mouvement d'une partie rotor de la turbomachine. Cependant, l'OTB est un dispositif complexe et fragile, susceptible de générer des disfonctionnements, notamment d'importantes fuites d'huiles affectant la fiabilité de la turbomachine et nécessitant la mise en place de pompes de récupération et un surdimensionnement du réservoir d'huile, qui peut être sujet à des problèmes de gavage lors de certaines manoeuvres. Par ailleurs, cette configuration présente des limitations de fonctionnement à bas régime puisqu'elle est dépendante du régime du corps haute pression de la turbomachine. Enfin, cette configuration nécessite un verrouillage du pas des pales (« pitch lock » en anglais), qui est lourd, complexe, cher et sujet au blocage.

De plus, la mise en fonctionnement du groupe de lubrification étant généralement lié à la mise en fonctionnement de la turbomachine, il est nécessaire de prévoir des systèmes auxiliaires afin d'assurer certaines fonctions de protection, notamment en cas de survitesse ou d'arrêt moteur. Il est donc nécessaire de prévoir un système de mise en drapeau fonctionnel même en cas d'absence de pression de fluide hydraulique.

D'autre part le mécanisme de changement de pas doit pouvoir moteur à l'arrêt assurer la sortie de la position drapeau.

Le document EP1306558A1 divulgue un dispositif de commande électrohydraulique de variation du pas des pales d'un rotor d'une machine, les pales étant montées sur un fût entraîné en rotation par un arbre d'entraînement de la machine et ayant chacune un pied pouvant pivoter autour d'un axe longitudinal de la pale, l'arbre d'entraînement étant lui même entraîné en rotation par rapport à une structure fixe de la machine, dispositif comportant d'une part un vérin hydraulique dont un piston est solidaire d'un anneau de commande et de synchronisation dans lequel sont engagés des manetons décentrés fixés sous chacun des pieds des pales et dont un corps cylindrique est fermé par un couvercle intégrant une pompe hydraulique haute pression alimentant en fluide hydraulique les deux faces du piston au travers de canaux intégrés dans le corps cylindrique du vérin, et d'autre part un moteur électrique commandé et alimenté en courant par une génératrice de courant comportant un inducteur solidaire de la structure fixe de la machine et un induit solidaire de l'arbre d'entraînement de la machine.

### PRESENTATION DE L'INVENTION

Un but de l'invention est de proposer une turbomachine à calage variable qui surmonte les inconvénients de l'art antérieur mentionnés ci-dessous.

Un autre but de l'invention est de proposer un mécanisme de changement de pas indépendant qui s'affranchisse des difficultés liées au transfert de fluide hydraulique d'un repère fixe vers un repère tournant.

Un autre but encore de l'invention est de propose un mécanisme de changement de pas qui puisse être utilisé quel que soit le fonctionnement de la turbomachine, qui soit en outre capable d'assurer les fonctions de protection et de mise en drapeau des pales de l'hélice/de la soufflante de la turbomachine, de préférence sans être dépendant d'un système électrique de contrôle.

Un autre but de l'invention est de proposer un mécanisme de changement de pas qui puisse à la fois être mis en œuvre dans une turbomachine type turbopropulseur ou open rotor comprenant une hélice et un turboréacteur comprenant une soufflante.

A cet effet, l'invention propose, selon un premier aspect, un mécanisme de changement de pas pour une hélice de turbomachine, ladite turbomachine comprenant une partie stator et une partie rotor, ledit mécanisme de changement de pas comprenant un actionneur électrohydraulique comprenant :
- une machine électrique montée fixe sur la partie stator de la turbomachine et comprenant un arbre d'actionnement mobile en rotation autour d'un axe de rotation ;
- une pompe hydraulique à pistons axiaux adaptée pour mettre sous pression un fluide hydraulique, la pompe hydraulique comprenant :
   ∘ un corps entrainé par l'hélice ;
   ∘ un barillet logeant un ensemble de pistons répartis circonférentiellement autour de l'axe de rotation, chaque piston comprenant un patin de glissement ; et
   ∘ un plateau incliné par rapport à l'axe de rotation, chaque patin de glissement prenant appui sur le plateau,
l'un parmi le plateau incliné et le barillet étant raccordé fixement à la partie stator de la turbomachine afin d'empêcher sa rotation autour de l'axe d'actionnement et l'autre parmi le plateau incliné et le barillet étant solidaire en rotation de l'arbre d'actionnement.

L'invention est avantageusement complétée par les caractéristiques suivantes, prises seules ou en une quelconque de leur combinaison techniquement possible :
- la machine électrique est une machine asynchrone ;
- le plateau incliné est raccordé fixement à la partie stator de la turbomachine, le mécanisme comprenant en outre un premier roulement configuré pour supporter l'arbre d'actionnement et un deuxième roulement configuré pour supporter le plateau ;
- le premier roulement est monté entre l'arbre d'actionnement et le plateau ;
- le deuxième roulement est monté entre le plateau et le corps ;
- le plateau comprend une première portion comprenant une face inclinée par rapport à l'axe de rotation sur laquelle les patins de glissement viennent en appui, et une deuxième portion configurée pour être fixée sur la partie stator de la turbomachine ;
- le barillet est raccordé fixement à la partie stator de la turbomachine, le mécanisme comprenant en outre un premier roulement configuré pour supporter le plateau et un deuxième roulement configuré pour supporter le barillet ;
- le premier roulement est monté entre le plateau et le barillet ;
- le deuxième roulement est monté entre le barillet et le corps ;
- la turbomachine comprend en outre un réducteur mécanique planétaire comprenant un pignon solaire, une couronne coaxiale avec le pignon solaire et configurée pour entrainer en rotation l'hélice et une série de satellites répartis circonférentiellement autour de l'axe de rotation du réducteur entre le pignon solaire et la couronne, chaque satellite étant monté sur un porte-satellites qui est fixe par rapport à une partie stator de la turbomachine ;
- l'élément parmi le plateau et le barillet qui est raccordé fixement à la partie stator de la turbomachine est monté sur le porte-satellites ;
- un pas de l'hélice est contrôlé par un asservissement en couple de la machine électrique ;
- le mécanisme de changement de pas comprend en outre un réservoir de fluide hydraulique qui est solidaire en rotation de l'hélice ;
- le corps délimite une cavité remplie par du fluide hydraulique, le mécanisme de changement de pas comprenant en outre :
   ∘ un barillet logé dans la cavité du corps de sorte à être immergé dans le fluide hydraulique ;
   ∘ un ensemble de cylindres formés dans le barillet, chaque cylindre logeant un piston mobile en translation dans le cylindre et comprenant un orifice d'admission configuré pour recevoir du fluide hydraulique en provenance de la cavité et un orifice de refoulement configuré pour envoyer du fluide hydraulique vers un vérin d'actionnement de l'hélice ; et
   ∘ une rainure annulaire formée dans le corps en communication fluidique avec l'orifice de refoulement ;
- chaque cylindre comprend en outre un clapet de refoulement monté sur l'orifice de refoulement et configuré pour bloquer une circulation du fluide hydraulique de la rainure annulaire en direction du cylindre ;
- le clapet de refoulement est monté dans le cylindre ;
- chaque cylindre comprend en outre un clapet d'admission monté sur l'orifice d'admission et configuré pour bloquer une circulation du fluide hydraulique du cylindre en direction de la cavité ;
- le clapet d'admission est monté à proximité du patin de glissement ;
- le clapet d'admission est monté dans le cylindre ;
- le vérin d'actionnement de l'hélice comprend deux chambres et le mécanisme comprend en outre une vanne hydraulique configurée pour mettre en communication sélectivement l'une des chambres du vérin avec la rainure annulaire.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
La figure 1 est une vue en coupe schématique d'un exemple de turbomachine comprenant une soufflante ou une hélice à calage variable et un mécanisme de changement de pas conforme à un mode de réalisation de l'invention ;
La figure 2 est une vue en coupe partielle et schématique d'un exemple de réalisation d'un réducteur mécanique du type planétaire pouvant être utilisé dans une turbomachine comprenant un mécanisme de changement de pas conforme à un mode de réalisation de l'invention ;
La figure 3 est une vue en coupe schématique d'un exemple de turbomachine comprenant une soufflante ou une hélice à calage variable et un mécanisme de changement de pas conforme à un mode de réalisation de l'invention ;
La figure 4 est une vue schématique d'un mécanisme de changement de pas d'une hélice selon une variante de réalisation ;
La figure 5 est une vue schématique d'un exemple de rainure annulaire formée dans le corps d'une pompe ;
La figure 6 est une vue schématique d'un mécanisme de changement de pas d'une hélice selon une variante de réalisation ;
La figure 7 est une vue schématique d'un mécanisme de changement de pas d'une hélice selon une variante de réalisation ;

### DESCRIPTION DETAILLEE

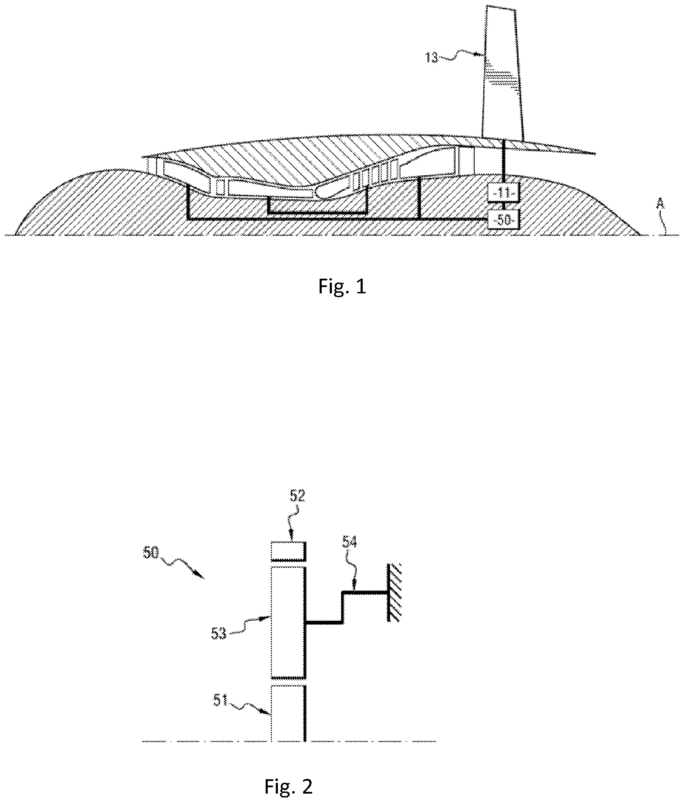

La présente invention s'applique à toute turbomachine à calage variable comprenant un mécanisme de changement de pas. En particulier, l'invention concerne à la fois les turboréacteurs à double flux comprenant une soufflante et les turbomachines à hélice telles que les turbopropulseurs ou encore les open rotor (hélice non carénée) tels que représenté à la **figure 1****,** dont le pas des pales de la soufflante ou de l'hélice est modifiable en fonction des conditions de vol. Dans la suite de la demande, par souci de simplification de la description et des revendications, le terme « hélice » sera utilisé aussi bien pour désigner une hélice comme décrite ci-dessus ou une soufflante d'un turboréacteur.

De manière conventionnelle, la turbomachine comprend, en plus de l'hélice, un réducteur mécanique 50, tel qu'illustré par la **figure 2** configuré pour entrainer en rotation l'hélice. Le réducteur 50 est logé dans un carter de la turbomachine. La turbomachine est configurée pour être montée fixement sur un aéronef par l'intermédiaire de moyens de fixation adaptés, tels qu'un pylône. Dans ce qui suit, on désignera ainsi une partie stator de la turbomachine toute partie montée fixement sur une partie de la turbomachine qui est fixe par rapport au carter qui est configuré pour être raccordé au pylône, et une partie rotor de la turbomachine toute partie qui est mobile autour d'un axe lorsque la turbomachine est en fonctionnement et qui, par définition, est donc montée mobile par rapport à la partie stator. A titre d'exemple, la partie stator comprend le carter de la turbomachine dans lequel sont logés des moyens d'entrainement de l'hélice, etc. La partie rotor comprend par exemple l'hélice ainsi que son arbre d'entrainement.

Enfin, dans la présente demande, l'amont et l'aval sont définis par rapport au sens d'écoulement normal du gaz dans et à travers l'hélice. Par ailleurs, on appelle axe A de la pompe hydraulique, son axe de rotation. La direction axiale correspond à la direction de l'axe A et une direction radiale est une direction perpendiculaire à cet axe et passant par lui. Par ailleurs, la direction circonférentielle (ou latérale) correspond à une direction perpendiculaire à l'axe A et ne passant pas par lui. Sauf précision contraire, interne et externe, respectivement, sont utilisés en référence à une direction radiale de sorte que la partie ou la face interne d'un élément est plus proche de l'axe A que la partie ou la face externe du même élément. De plus, un élément est considéré « dans un repère fixe » lorsque celui-ci est maintenu immobile en rotation par rapport à l'axe A, tandis qu'il est considéré « dans un repère tournant » lorsqu'il est susceptible d'être entrainé en rotation par rapport à l'axe A.

Le réducteur 50 est de type planétaire et comprend :
- un pignon solaire 51, centré sur un axe de rotation du réducteur et configuré pour être entrainé en rotation par un arbre d'entrée d'entrainement de la turbomachine,
- une couronne 52, coaxiale avec le pignon solaire 51 et configurée pour entrainer en rotation l'arbre d'entrainement de l'hélice autour de l'axe de rotation, et
- une série de satellites 53 répartis circonférentiellement autour de l'axe de rotation du réducteur entre le pignon solaire 51 et la couronne 52, chaque satellite étant engrené intérieurement avec le pignon solaire 51 et extérieurement avec la couronne 52. La série de satellites 53 est montée sur un porte-satellites 54 qui est fixe par rapport à une partie stator de la turbomachine.

En variante, le réducteur 50 peut être épicycloïdal, auquel cas la couronne 52 est montée fixement sur une partie stator de la turbomachine et l'arbre d'entrainement est entrainé en rotation par le porte-satellites 54.

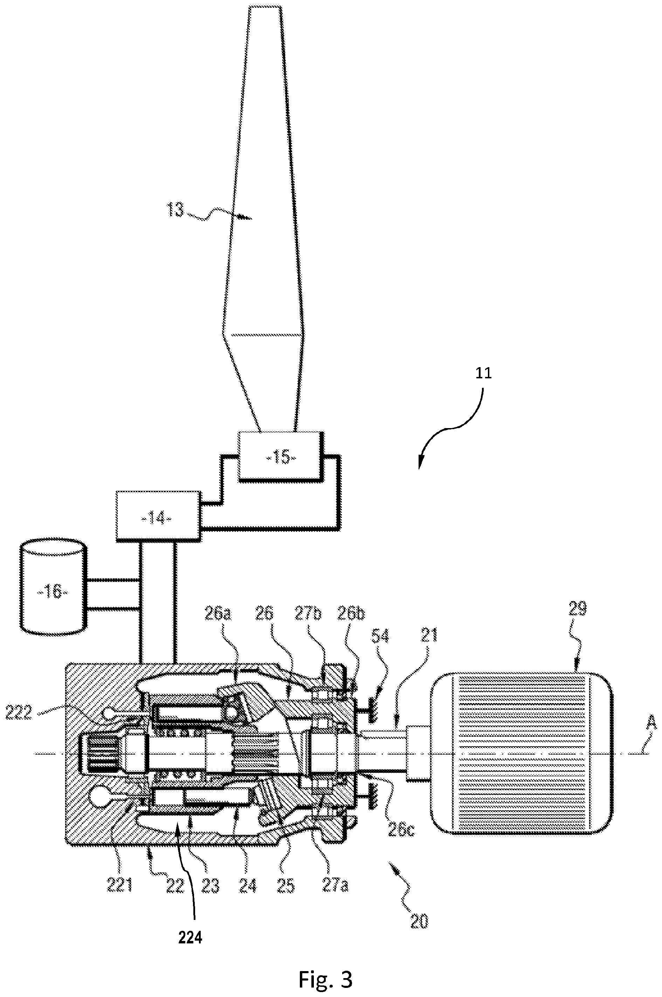

Comme illustré sur la **figure 3****,** le mécanisme de changement de pas comprend un actionneur électrohydraulique 11 (EHA, acronyme anglais de « Electro Hydraulic Actuator »), configuré pour actionner un vérin 15 qui est raccordé mécaniquement à l'hélice 13 afin d'en modifier le pas, une pompe hydraulique 20 configurée pour mettre sous pression un fluide (typiquement de l'huile) et une machine électrique 29.

La machine électrique 29 est montée fixe sur la partie stator de la turbomachine et comprend un arbre d'actionnement 21 mobile en rotation autour d'un axe de rotation A.

La pompe hydraulique 20 est une pompe à cylindre axiaux à cylindrée fixe comprenant un corps 22 entrainé en rotation par l'hélice 13, un ensemble de pistons 24 répartis circonférentiellement autour de l'axe de rotation A et un plateau 26.

Plus précisément, le corps 22 définit une cavité 224 dans laquelle est logé un barillet 23. Des alésages formant des cylindres configurés pour recevoir à coulissement les pistons 24 sont formés dans le barillet 23. L'axe de translation des pistons 24 est sensiblement parallèle à l'axe de rotation A. Le barillet 23 et les pistons 24 sont solidaires en rotation de l'arbre d'actionnement 21. Chaque piston 24 comprend un patin de glissement 25 configuré pour venir en appui contre le plateau 26. Les patins de glissement 25 sont configurés pour glisser librement le long du plateau 26 tout en étant en appui contre celui-ci (contact continu) quelle que soit la position angulaire des pistons 24 autour de l'axe de rotation A.

Le plateau 26 est monté autour de l'arbre d'actionnement 21 en étant incliné par rapport à l'axe de rotation A.

Dans une première forme de réalisation, le plateau 26 est raccordé fixement à la partie stator de la turbomachine afin d'empêcher sa rotation autour de l'axe de rotation A. Le plateau incliné 26 est donc immobile en rotation autour de l'axe de rotation A (donc dans le repère fixe). Dans une forme de réalisation, le plateau 26 peut être monté sur le porte-satellites 54 du réducteur 50. En variante, lorsque le réducteur 50 est du type épicycloïdal (arbre d'entrainement entrainé par le porte-satellites 54), le plateau 26 peut être monté sur la couronne 52 - on notera toutefois que cette configuration est plus complexe à mettre en oeuvre que dans le cas d'un mécanisme de réduction planétaire.

Le plateau incliné 26 comprend en particulier une première portion 26a comprenant une face inclinée par rapport à l'axe de rotation sur laquelle les patins de glissement 25 viennent en appui, et une deuxième portion 26b configurée pour être fixée sur la partie stator de la turbomachine, typiquement le porte-satellites 54. La première portion 26a et la deuxième portion 26b sont traversées par un orifice traversant 26c configuré pour recevoir l'arbre d'actionnement 21 de la machine électrique 29. Comme indiqué plus haut, ni la première portion 26a ni la deuxième portion 26b du plateau 26 ne sont fixées sur cet arbre d'actionnement 21. L'arbre d'actionnement 21 est donc mobile en rotation par rapport à ces deux portions du plateau 26.

A cet effet, l'actionneur électrohydraulique 11 comprend un premier roulement 27a configuré pour supporter l'arbre d'actionnement 21 et un deuxième roulement 27b configuré pour supporter le plateau 26. Le premier roulement 27a peut par exemple être monté entre l'arbre d'actionnement 21 et la deuxième portion 26b du plateau 26 (dans la paroi interne définissant l'orifice traversant 26c) tandis que le deuxième roulement 27b est monté entre le plateau 26 et le corps 22.

Lors du fonctionnement de l'actionneur électrohydraulique 11, le barillet 23 et les pistons 24 sont entrainés en rotation par l'arbre d'actionnement 21 autour de l'axe de rotation A. Les pistons 25 étant en appui continu contre le plateau 26, ce mouvement de rotation a pour effet de déplacer les patins de glissement 25 suivant un axe parallèle à l'axe de rotation A générant ainsi un mouvement de va-et-vient dont l'amplitude est déterminée par l'inclinaison du plateau 26 par rapport à l'axe de rotation A.

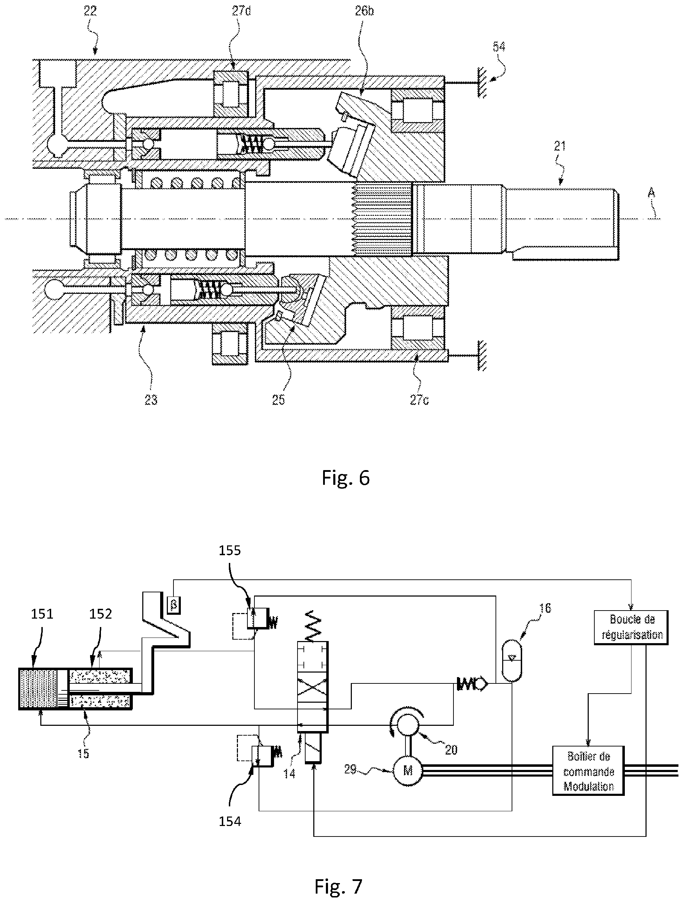

Dans un mode de réalisation alternatif illustré par la **figure 6****,** c'est le barillet 23 qui est immobile en rotation autour de l'axe A (donc dans le repère fixe). Pour cela, le barillet peut être monté sur le porte-satellites 54 du réducteur 50 ou bien, lorsque le réducteur 50 est du type épicycloïdal, le barillet 23 peut être monté sur la couronne 52. Dans ce mode de réalisation, c'est alors le plateau incliné 26 qui est entrainé en rotation par l'arbre d'actionnement 21 autour de l'axe de rotation A, afin de générer le mouvement de va-et-vient des pistons. Comme décrit précédemment, le plateau 26 comprend alors une première portion 26a comprenant une face inclinée par rapport à l'axe de rotation sur laquelle les patins de glissement 25 viennent en appui, et une deuxième portion 26b configurée pour être fixée sur l'arbre d'actionnement 21.

Afin de permettre le blocage en rotation du barillet, l'actionneur électrohydraulique 11 comprend un premier roulement 27c configuré pour supporter le plateau 26 et un deuxième roulement 27d configuré pour supporter le barillet 23. Le premier roulement 27c peut par exemple être monté entre le plateau 26 et le barillet 23, en particulier au niveau d'une portion reliant ce dernier au repère fixe, tandis que le deuxième roulement 27d est monté entre le barillet 23 et le corps 22.

Lors du fonctionnement de l'actionneur électrohydraulique 11, le plateau 26 est entrainé en rotation par l'arbre d'actionnement 21 autour de l'axe de rotation A. Le barillet 23 est fixe. Les pistons 25 étant en appui continu contre le plateau 26, ce mouvement de rotation a pour effet de déplacer les patins de glissement 25 suivant un axe parallèle à l'axe de rotation A générant ainsi un mouvement de va-et-vient dont l'amplitude est déterminée par l'inclinaison du plateau 26 par rapport à l'axe de rotation A.

Ce mode de réalisation alternatif permet un fonctionnement de la pompe strictement analogue à celui décrit précédemment.

Une telle architecture permet ainsi d'obtenir un actionneur électrohydraulique 11 dont le fonctionnement est indépendant de la rotation de son corps 22, celle-ci étant débitante uniquement lorsque l'arbre d'actionnement 21 est entrainé en rotation par la machine électrique 29. Or, la rotation de l'arbre d'actionnement 21 est indépendante du fonctionnement de la turbomachine, puisque la machine électrique 29 n'est pas actionnée par le réducteur 50. Ce mode de fonctionnement présente l'avantage de permettre la modification du pas de l'hélice 13 même lorsque la turbomachine est à l'arrêt. Ainsi, il est possible de procéder à une mise en drapeau de l'hélice 13 même en cas de panne de la turbomachine en vol. Il est en outre possible de modifier le pas de l'hélice 13 avant le démarrage de la turbomachine et ainsi assurer la fonction de sortie de la position drapeau. De plus, il n'est alors plus nécessaire de surdimensionner la machine électrique 29, la mise en rotation de l'arbre d'actionnement 21 par la machine électrique 29 n'étant requise que lors d'une commande de changement de pas.

En outre, le fonctionnement de l'actionneur électrohydraulique 11 étant indépendant de la rotation de son corps 22, le fonctionnement de la pompe hydraulique 20 peut être entièrement contrôlée par la machine électrique 29. Ce mode de fonctionnement permet alors de faire varier la pression de fluide hydraulique produite simplement en faisant varier les paramètres de fonctionnement de la machine électrique 29. En particulier, le pas étant directement contrôlé par la pression hydraulique produite par la pompe hydraulique 20, qui dépend de la vitesse de déplacement des pistons 24, le contrôle du pas de l'hélice 13 peut être réalisé grâce à un asservissement en couple de la machine électrique 29. Dans une forme de réalisation, la machine électrique 29 est une machine asynchrone, une telle machine n'induisant pas de couple résistif en cas de court-circuitage et réduisant ainsi les risques de feu.

Par ailleurs, la pompe est ici à cylindrée fixe, ce qui améliore la durée de vie de l'actionneur électrohydraulique et sa robustesse, en comparaison avec une pompe à cylindrée variable.

Dans une forme de réalisation, l'actionneur électrohydraulique 11 comprend en outre un réservoir de fluide hydraulique 16 solidaire en rotation de l'hélice 13. Le réservoir a pour fonction de garantir une pression minimale au niveau de l'alimentation de la pompe au travers d'un clapet d'anti-retour et a également comme fonction d'éviter tout risque de surpression au niveau du refoulement au travers d'un clapet de surpression en cas d'échauffement.

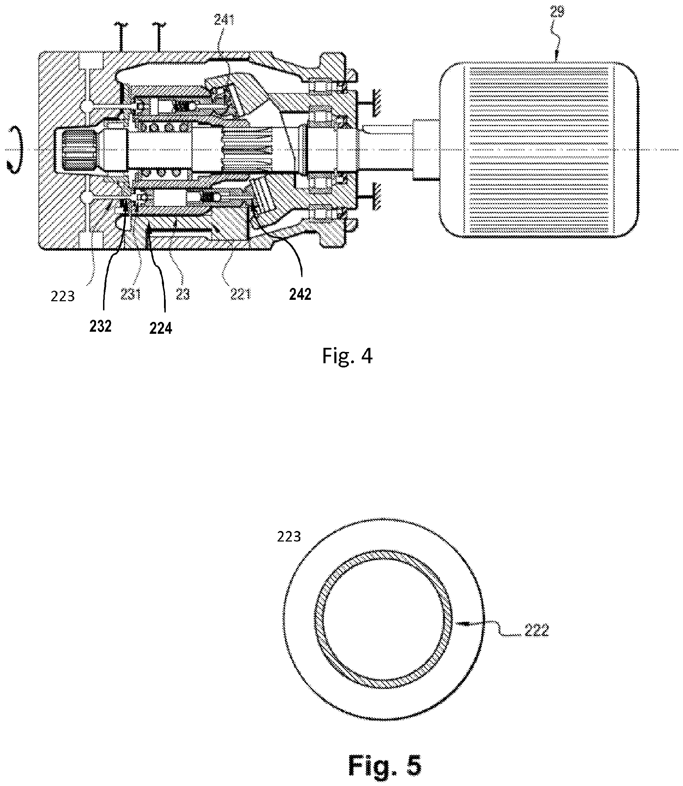

Le corps 22 de la pompe hydraulique 20 comprend en outre une lumière de refoulement 221 et une lumière d'admission 222 en communication fluidique d'une part avec les cylindres des pistons 24 et d'autre part avec un vérin 15 du mécanisme de changement de pas afin d'alimenter ledit vérin 15 en fluide sous pression. Le corps 22 de la pompe hydraulique 20 étant solidaire en rotation de l'hélice 13, les lumières de refoulement 221 et d'admission 222 sont également mobiles en rotation par rapport aux pistons 24, rendant ainsi la distribution par glace inappropriée. En effet, lors d'une commande de pas, les lumières de refoulement 221 et d'admission 222 n'auront plus une position angulaire correcte vis-à-vis de la course des pistons 24. Par conséquent, la pompe hydraulique 20 est choisie de sorte que la distribution est indifférente de la position angulaire du corps 22 (voir notamment figure 4).

Le vérin 15 comprend de préférence un vérin double effet comprenant une première chambre 151 et une deuxième chambre 152 en communication fluidique successivement avec la lumière de refoulement 221 et la lumière d'admission 222. L'actionnement de la pompe hydraulique 20 par la machine électrique 29 a donc pour effet de remplir (respectivement vider) la première chambre 151 et de vider (respectivement remplir) la deuxième chambre 152. Le vérin 15 est par ailleurs solidaire en rotation de l'hélice 13 et raccordé à celle-ci de sorte que l'actionnement du vérin 15 (par remplissage et vidage successifs des première et deuxième chambres) a pour effet de modifier le pas de l'hélice 13.

Dans une variante de réalisation illustrée sur la **figure 4****,** la cavité 224 du corps 22 est remplie par du fluide hydraulique, permettant ainsi de l'utiliser comme réservoir de fluide hydraulique. Le cas échéant, la cavité 224 est alimentée en fluide hydraulique par le réservoir de fluide hydraulique 16.

Le barillet 23 est immergé dans le fluide hydraulique contenu par la cavité 224.

Dans cette variante de réalisation, les cylindres comprennent un orifice d'admission 242 configuré pour recevoir du fluide hydraulique en provenance de la cavité 224 ainsi qu'un orifice de refoulement 232 configuré pour refouler le fluide hydraulique contenu dans le cylindre vers le vérin 15 d'actionnement de l'hélice par l'intermédiaire d'une rainure annulaire 223 formée dans le corps 22 **(****figure** 5). Ainsi, dans cette variante de réalisation, la rainure annulaire 223 remplace la distribution par glace à l'aide de deux lumières (d'aspiration et de refoulement) conventionnellement utilisée pour mettre en communication les cylindres des pistons 24 avec le vérin d'actionnement 15.

L'utilisation d'une telle rainure annulaire 223 en communication fluidique avec les orifices de refoulement des cylindres permet à la pompe de fonctionner quelle que soit la position angulaire du corps 22 et donc des orifices de refoulement lors du mouvement des pistons 24.

Dans une forme de réalisation, chaque cylindre comprend des moyens sous la forme d'un clapet de refoulement 231 monté au niveau de l'orifice de refoulement 232. Chaque clapet de refoulement 231 présente une configuration ouverte, dans laquelle le clapet de refoulement 231 est ouvert et permet au fluide hydraulique de circuler du cylindre vers la rainure annulaire 223, et une configuration fermée, dans laquelle le clapet de refoulement 231 ferme le cylindre et empêche la circulation de fluide hydraulique entre le cylindre et la rainure annulaire 223. En configuration fermée, le clapet de refoulement 231 permet ainsi de bloquer le retour de fluide hydraulique sous pression en provenance de la rainure annulaire 223 en direction des cylindres. Le corps 22 étant mobile en rotation, les clapets de refoulement 231 sont de préférence montés à l'intérieur des cylindres et se positionnent automatiquement (de manière passive) en configuration ouverte ou fermée en fonction de la position du piston 24 dans le cylindre.

De manière similaire, chaque cylindre comprend des moyens 241 configurés pour contrôler la circulation du fluide hydraulique entre le cylindre et le barillet. Dans une forme de réalisation, les moyens 241 comprennent un clapet d'admission 241 monté au niveau de l'orifice d'admission 242. Chaque clapet de d'admission 241 présente une configuration ouverte, dans laquelle le clapet d'admission 241 est ouvert permet au fluide hydraulique de circuler du barillet vers le cylindre, et une configuration fermée, dans laquelle le clapet d'admission 241 ferme le cylindre et empêche la circulation de fluide hydraulique entre le cylindre et le barillet. En configuration fermée, le clapet d'admission 241 permet ainsi de bloquer le retour de fluide hydraulique sous pression en provenance du cylindre en direction du barillet. Le barillet étant mobile en rotation, les clapets d'admission 241 sont de préférence montés à l'intérieur des cylindres et se positionnent automatiquement (de manière passive) en configuration ouverte ou fermée en fonction de la position du piston 24 dans le cylindre. Le cas échéant, les clapets d'admission 241 peuvent notamment être montés à proximité du patin de glissement 25.

La pompe ainsi décrite est donc fonctionnelle quelle que soit la position angulaire de son corps 22. Cette pompe n'étant pas réversible en raison de la configuration des orifices de refoulement et d'admission, l'actionneur hydraulique 11 peut en outre comprendre une vanne hydraulique d'inversion de débit 14, positionnée dans le circuit hydraulique entre la rainure annulaire 223 et le vérin 15 d'actionnement. La vanne hydraulique d'inversion de débit 14 est en particulier configurée pour raccorder sélectivement l'une ou l'autre des chambres du vérin 15 à la rainure annulaire 223 et à la cavité 224, selon les besoins d'actionnement du vérin 15 pour obtenir le calage de pas désiré pour l'hélice.

La vanne hydraulique d'inversion de débit 14 est commandée par un contrôleur du mécanisme de changement de pas afin de mettre en communication fluidique la rainure annulaire 223 avec la première ou la deuxième chambre 152 du vérin 15, selon le sens dans lequel le calage de l'hélice doit être modifié. Lorsque le calage de l'hélice doit être modifié, le contrôleur commande la machine électrique afin de mettre en rotation l'arbre d'actionnement 21 et d'entrainer en rotation le barillet 23 (ou le cas échéant le plateau 26). La rotation du barillet 23 (ou le cas échéant du plateau 26) a pour effet de mettre en rotation les pistons 24 autour de l'axe de rotation de l'arbre d'entrainement. Les patins de glissement des pistons 24 étant en contact continu contre le plateau, qui est incliné, la rotation de l'arbre d'actionnement 21 génère alors un mouvement axial des pistons 24 dans leur cylindre respectif permettant d'admettre et de refouler le fluide hydraulique. En particulier, lorsque l'un des pistons 24 vient dans une configuration d'admission, dans laquelle son clapet d'admission est en configuration ouverte et son clapet de refoulement est en configuration fermée afin de permettre au fluide hydraulique d'entrer dans le cylindre, un autre des pistons vient dans une configuration de refoulement dans laquelle son clapet d'admission est en configuration fermée et son clapet de refoulement est en configuration ouverte, permettant au fluide hydraulique de sortir de l'orifice de refoulement 232 du cylindre vers la rainure annulaire 223, et inversement. Les pistons 24 refoulent donc successivement du fluide hydraulique sous pression vers la rainure annulaire 223. Ce fluide hydraulique sous pression est ensuite amené de la rainure annulaire 223 vers la vanne hydraulique d'inversion de débit 14, qui selon sa position (définie par le contrôleur et la commande de calage de l'hélice) enverra ce fluide hydraulique sous pression vers l'une ou l'autre des chambres du vérin 15. La modification du pas provoquée par l'entrainement en rotation de l'arbre d'actionnement 21 peut alors être mesurée afin de déterminer une commande de couple pour la machine électrique 29 permettant d'atteindre le pas désiré.

De manière conventionnelle, le mécanisme de changement de pas peut en outre comprendre un système de mise en drapeau fonctionnel en cas d'absence de pression de fluide hydraulique. Dans une forme de réalisation, le système de mise en drapeau comprend des contrepoids du type masselotte.

Lorsque la pompe hydraulique utilisée dans le mécanisme de changement de pas n'est pas réversible, le mécanisme de changement de pas peut en outre comprendre une vanne d'inversion de débit 14 configurée pour mettre sélectivement en communication fluidique la pompe hydraulique 20 avec la première chambre 151 ou la deuxième chambre 152 du vérin 15, de manière à permettre la modification du pas de l'hélice (voir par exemple sur la **figure 7****).**

Cependant lorsque qu'une pompe hydraulique réversible est utilisée il n'est pas nécessaire d'utiliser une telle vanne d'inversion de débit, chacune des chambres du vérin pouvant être relié à une des sorties de la pompe hydraulique.

Cette configuration du mécanisme de changement de pas permet ainsi de s'affranchir de l'utilisation d'un transfert d'huile tournant (OTB), supprimant ainsi les risques de fuite et les pompes de récupération d'huile associée ainsi que le surdimensionnement associé du réservoir d'huile. Le circuit est en outre indépendant du groupe de lubrification. En particulier, la pression délivrée par la pompe hydraulique 20 peut atteindre des niveaux importants (de l'ordre de 300 bars), ce qui facilite le dimensionnement du vérin 15.

## Revendications

1. Mécanisme de changement de pas d'une hélice (10) de turbomachine, ladite turbomachine comprenant une partie stator et une partie rotor, ledit mécanisme de changement de pas comprenant un actionneur électrohydraulique (11) comprenant :
- une machine électrique (29) configurée pour être montée fixe sur la partie stator de la turbomachine et comprenant un arbre d'actionnement (21) mobile en rotation autour d'un axe de rotation (A) ;
- une pompe hydraulique à pistons axiaux (20) adaptée pour mettre sous pression un fluide hydraulique, la pompe hydraulique (20) comprenant :
- un corps (22) configurée pour être entrainé par l'hélice (10) ;
- un barillet (23) logeant un ensemble de pistons (24) répartis circonférentiellement autour de l'axe de rotation (A), chaque piston (24) comprenant un patin de glissement ; et
- un plateau (26) incliné par rapport à l'axe de rotation (A), chaque patin de glissement (25) prenant appui sur le plateau (26),
l'un parmi le plateau incliné et le barillet (23) étant configurée pour être raccordé fixement à la partie stator de la turbomachine afin d'empêcher sa rotation autour de l'axe d'actionnement (21) et l'autre parmi le plateau incliné (26) et le barillet (23) étant solidaire en rotation de l'arbre d'actionnement (21).

2. Mécanisme de changement de pas selon la revendication 1, dans lequel la machine électrique (29) est une machine asynchrone.

3. Mécanisme de changement de pas selon l'une des revendications 1 ou 2, dans lequel le plateau incliné (26) est configuré pour être raccordé fixement à la partie stator (54) de la turbomachine, le mécanisme comprenant en outre un premier roulement (27a) configuré pour supporter l'arbre d'actionnement (21) et un deuxième roulement (27b) configuré pour supporter le plateau (26).

4. Mécanisme de changement de pas selon la revendication 3, dans lequel le premier roulement (27a) est monté entre l'arbre d'actionnement (21) et le plateau (26) et/ou le deuxième roulement (27b) est monté entre le plateau (26) et le corps (22).

5. Mécanisme de changement de pas selon l'une des revendications 3 et 4, dans lequel le plateau (26) comprend une première portion (26a) comprenant une face inclinée par rapport à l'axe de rotation (A) sur laquelle les patins de glissement (25) viennent en appui, et une deuxième portion (26b) configurée pour être fixée sur la partie stator de la turbomachine.

6. Mécanisme de changement de pas selon l'une des revendications 1 ou 2, dans lequel le barillet (23) est configurée pour être raccordé fixement à la partie stator (54) de la turbomachine, le mécanisme comprenant en outre un premier roulement (27c) configuré pour supporter le plateau (26) et un deuxième roulement (27d) configuré pour supporter le barillet (23).

7. Mécanisme de changement de pas selon la revendication 6, dans lequel le premier roulement (27c) est monté entre le plateau (26) et le barillet (23) et/ou le deuxième roulement (27d) est monté entre le barillet (23) et le corps (22).

8. Mécanisme de changement de pas selon l'une des revendications 1 à 7, dans lequel la turbomachine comprend en outre un réducteur mécanique planétaire (50) comprenant un pignon solaire (51), une couronne (52) coaxiale avec le pignon solaire (51) et configurée pour entrainer en rotation l'hélice et une série de satellites (53) répartis circonférentiellement autour de l'axe de rotation du réducteur (50) entre le pignon solaire (51) et la couronne (52), chaque satellite étant monté sur un porte-satellites (54) qui est fixe par rapport à une partie stator de la turbomachine, l'élément parmi le plateau (26) et le barillet (23) qui est configurée pour être raccordé fixement à la partie stator de la turbomachine étant configuré pour être monté sur le porte-satellites (54).

9. Mécanisme de changement de pas selon l'une des revendications 1 à 8, dans lequel un pas de l'hélice (13) est configurée pour être contrôlé par un asservissement en couple de la machine électrique (29).

10. Mécanisme de changement de pas d'une hélice (10) selon l'une des revendications 1 à 11, dans laquelle le corps (22) délimite une cavité (224) remplie par du fluide hydraulique, le mécanisme de changement de pas comprenant en outre :
- un barillet (23) logé dans la cavité (224) du corps de sorte à être immergé dans le fluide hydraulique;
- un ensemble de cylindres formés dans le barillet (23), chaque cylindre logeant un piston (24) mobile en translation dans le cylindre et comprenant un orifice d'admission (242) configuré pour recevoir du fluide hydraulique en provenance de la cavité (224) et un orifice de refoulement (232) configuré pour envoyer du fluide hydraulique vers un vérin d'actionnement de l'hélice ; et
- une rainure annulaire (223) formée dans le corps (22) en communication fluidique avec l'orifice de refoulement (232).

11. Mécanisme de changement de pas selon la revendication 10, dans lequel chaque cylindre comprend en outre un clapet de refoulement (231) monté sur l'orifice de refoulement (232) et configuré pour bloquer une circulation du fluide hydraulique de la rainure annulaire (223) en direction du cylindre, le clapet de refoulement (231) pouvant être monté dans le cylindre.

12. Mécanisme de changement de pas selon l'une des revendications 10 et 11, dans lequel chaque cylindre comprend en outre un clapet d'admission (241) monté sur l'orifice d'admission (242) et configuré pour bloquer une circulation du fluide hydraulique du cylindre en direction de la cavité (224), le clapet d'admission (241) pouvant être monté à proximité du patin de glissement et/ou dans le cylindre.

13. Mécanisme de changement de pas selon l'une des revendications 10 à 12, dans lequel le vérin d'actionnement (15) de l'hélice comprend deux chambres et le mécanisme comprend en outre une vanne hydraulique (14) configurée pour mettre en communication sélectivement l'une des chambres du vérin avec la rainure annulaire (223).

14. Turbomachine comprenant une hélice (13) et un mécanisme de changement de pas selon l'une des revendications 1 à 13 configuré pour actionner un vérin (15) qui est raccordé mécaniquement à l'hélice (13).

15. Aéronef comprenant au moins une turbomachine selon la revendication 14 raccordée sur l'aéronef par l'intermédiaire d'un pylône.

## Patentansprüche

1. Mechanismus zum Ändern der Blattanstellung einer Luftschraube (10) einer Turbomaschine, wobei die Turbomaschine einen Statorteil und einen Rotorteil umfasst, wobei der Mechanismus zum Ändern der Blattanstellung einen elektrohydraulischen Aktuator (11) umfasst, der umfasst:
- eine elektrische Maschine (29), die zur festen Anbringung am Statorteil der Turbomaschine ausgelegt ist und eine Antriebswelle (21) umfasst, die um eine Drehachse (A) rotationsbeweglich ist;
- eine Axialkolben-Hydraulikpumpe (20), die geeignet ist, ein Hydraulikfluid unter Druck zu setzen, wobei die Hydraulikpumpe (20) umfasst:
- einen Körper (22), der ausgelegt ist, um von der Luftschraube (10) angetrieben zu werden;
- einen Zylinderstern (23), der eine Gruppe von Kolben (24) aufnimmt, die umfangmäßig um die Drehachse (A) verteilt sind, wobei jeder Kolben (24) einen Gleitschuh umfasst; und
- eine relativ zur Drehachse (A) geneigte Platte (26), wobei jeder Gleitschuh (25) auf der Platte (26) aufliegt,
wobei entweder die geneigte Platte oder der Zylinderstern (23) ausgelegt ist, um fest mit dem Statorteil der Turbomaschine verbunden zu sein, um dessen Drehung um die Antriebsachse (21) zu verhindern, und wobei das andere Element, entweder die geneigte Platte (26) oder der Zylinderstern (23), drehfest mit der Antriebswelle (21) verbunden ist.

2. Mechanismus zum Ändern der Blattanstellung nach Anspruch 1, wobei die elektrische Maschine (29) eine Asynchronmaschine ist.

3. Mechanismus zum Ändern der Blattanstellung nach einem der Ansprüche 1 oder 2, wobei die geneigte Platte (26) ausgelegt ist, um fest mit dem Statorteil (54) der Turbomaschine verbunden zu sein, wobei der Mechanismus ferner ein erstes Lager (27a) umfasst, das ausgelegt ist, um die Antriebswelle (21) zu lagern, und ein zweites Lager (27b), das ausgelegt ist, um die Platte (26) zu lagern.

4. Mechanismus zum Ändern der Blattanstellung nach Anspruch 3, wobei das erste Lager (27a) zwischen der Antriebswelle (21) und der Platte (26) angebracht ist und/oder das zweite Lager (27b) zwischen der Platte (26) und dem Körper (22) angebracht ist.

5. Mechanismus zum Ändern der Blattanstellung nach einem der Ansprüche 3 und 4, wobei die Platte (26) einen ersten Abschnitt (26a) umfasst, der eine relativ zur Drehachse (A) geneigten Fläche umfasst, auf der die Gleitschuhe (25) aufliegen, und einen zweiten Abschnitt (26b), der zur Befestigung am Statorteil der Turbomaschine ausgelegt ist.

6. Mechanismus zum Ändern der Blattanstellung nach einem der Ansprüche 1 oder 2, wobei der Zylinderstern (23) ausgelegt ist, um fest mit dem Statorteil (54) der Turbomaschine verbunden zu sein, wobei der Mechanismus ferner ein erstes Lager (27c), umfasst, das ausgelegt ist, um die Platte (26) zu stützen, und ein zweites Lager (27d), das ausgelegt ist, um den Zylinderstern (23) zu stützen.

7. Mechanismus zum Ändern der Blattanstellung nach Anspruch 6, wobei das erste Lager (27c) zwischen der Platte (26) und dem Zylinderstern (23) angebracht ist und/oder das zweite Lager (27d) zwischen dem Zylinderstern (23) und dem Gehäuse (22) angebracht ist.

8. Mechanismus zum Ändern der Blattanstellung nach einem der Ansprüche 1 bis 7, wobei die Turbomaschine ferner ein mechanisches Planetengetriebe (50) umfasst, das ein Sonnenrad (51), einen mit dem Sonnenrad (51) koaxialen Zahnkranz (52), der ausgelegt ist, um die Luftschraube rotatorisch anzutreiben, und eine Reihe von Satelliten (53) umfasst, die umfangmäßig um die Drehachse des Getriebes (50) zwischen dem Sonnenrad (51) und dem Zahnkranz (52) verteilt sind, wobei jeder Satellit auf einem Satellitenträger (54) angebracht ist, der relativ zu einem Statorteil der Turbomaschine fest ist, wobei das Element, entweder die Platte (26) oder der Zylinderstern (23), das ausgelegt ist, um fest mit dem Statorteil der Turbomaschine verbunden zu sein, ausgelegt ist, um auf dem Satellitenträger (54) angebracht zu sein.

9. Mechanismus zum Ändern der Blattanstellung nach einem der Ansprüche 1 bis 8, wobei eine Blattanstellung der Luftschraube (13) ausgelegt ist, um durch eine Drehmomentregelung der elektrischen Maschine (29) gesteuert zu werden.

10. Mechanismus zum Ändern der Blattanstellung einer Luftschraube (10) nach einem der Ansprüche 1 bis 11, wobei der Körper (22) einen mit Hydraulikfluid gefüllten Hohlraum (224) begrenzt, wobei der Mechanismus zum Ändern der Blattanstellung ferner umfasst:
- einen Zylinderstern (23), der im Hohlraum (224) des Körpers derart angeordnet ist, dass er in das Hydraulikfluid eintaucht;
- eine Gruppe von Zylindern, die in dem Zylinderstern (23) ausgebildet sind, wobei jeder Zylinder einen im Zylinder translatorisch beweglichen Kolben (24) aufnimmt und eine Einlassöffnung (242) aufweist, die ausgelegt ist, um Hydraulikfluid aus dem Hohlraum (224) aufzunehmen, und eine Auslassöffnung (232), die ausgelegt ist, um Hydraulikfluid zu einem Antriebszylinder der Luftschraube zu leiten; und
- eine Ringnut (223), die im Körper (22) in Fluidkommunikation mit der Auslassöffnung (232) ausgebildet ist.

11. Mechanismus zum Ändern der Blattanstellung nach Anspruch 10, wobei jeder Zylinder ferner ein an der Auslassöffnung (232) angebrachtes Auslassventil (231) umfasst, das ausgelegt ist, um eine Zirkulation des Hydraulikfluids von der Ringnut (233) in Richtung des Zylinders zu blockieren, wobei das Auslassventil (231) im Zylinder angebracht sein kann.

12. Mechanismus zum Ändern der Blattanstellung nach einem der Ansprüche 10 und 11, wobei jeder Zylinder ferner ein Einlassventil (241) umfasst, das an der Einlassöffnung (242) angebracht und ausgelegt ist, um die Zirkulation des Hydraulikfluids vom Zylinder in Richtung des Hohlraums (224) zu blockieren, wobei das Einlassventil (241) in der Nähe des Gleitschuhs und/oder im Zylinder angebracht sein kann.

13. Mechanismus zum Ändern der Blattanstellung nach einem der Ansprüche 10 bis 12, wobei der Betätigungszylinder (15) der Luftschraube zwei Kammern umfasst und der Mechanismus ferner ein Hydraulikventil (14) umfasst, das ausgelegt ist, um selektiv eine der Kammern des Zylinders mit der Ringnut (223) in Kommunikation zu versetzen.

14. Turbomaschine, umfassend eine Luftschraube (13) und einen Mechanismus zum Ändern der Blattanstellung nach einem der Ansprüche 1 bis 13, der zum Betätigen eines Zylinders (15) ausgelegt ist, der mit der Luftschraube (13) mechanisch verbunden ist.

15. Luftfahrzeug, umfassend mindestens eine Turbomaschine nach Anspruch 14, die über einen Pylon mit dem Luftfahrzeug verbunden ist.

## Claims

1. A pitch change mechanism for a turbomachine propeller (10), said turbomachine comprising a stator part and a rotor part, said pitch change mechanism comprising an electrohydraulic actuator (11), comprising:
- an electric machine (29) configured to be fixedly mounted on the stator part of the turbomachine and comprising an actuating shaft (21) rotationally movable about an axis of rotation (A);
- an axial-piston hydraulic pump (20) suitable for pressurizing a hydraulic fluid, the hydraulic pump (20) comprising:
- a body (22) configured to be driven by the propeller (10) ;
- a barrel (23) housing a set of pistons (24) circumferentially distributed around the axis of rotation (A), each piston (24) comprising a sliding pad; and
- a plate (26) inclined with respect to the axis of rotation (A), each sliding pad (25) bearing on the plate (26),
one from among the inclined plate and the barrel (23) being configured to be fixedly connected to the stator part of the turbomachine to prevent its rotation about the actuating axis (21) and the other from among the inclined plate (26) and the barrel (23) being rotationally secured to the actuating shaft (21).

2. The pitch change mechanism as claimed in claim 1, wherein the electric machine (29) is an asynchronous machine.

3. The pitch change mechanism as claimed in one of claims 1 or 2, wherein the inclined plate (26) is configured to be fixedly connected to the stator part (54) of the turbomachine, the mechanism further comprising a first bearing (27a) configured to support the actuating shaft (21) and a second bearing (27b) configured to support the plate (26).

4. The pitch change mechanism as claimed in claim 3, wherein the first bearing (27a) is mounted between the actuating shaft (21) and the plate (26) and/or the second bearing (27b) is mounted between the plate (26) and the body (22).

5. The pitch change mechanism as claimed in one of claims 3 and 4, wherein the plate (26) comprises a first portion (26a) comprising a face inclined with respect to the axis of rotation (A) on which the sliding pads (25) are bearing, and a second portion (26b) configured to be attached to the stator part of the turbomachine.

6. The pitch change mechanism as claimed in one of claims 1 or 2, wherein the barrel (23) is configured to be fixedly connected to the stator part (54) of the turbomachine, the mechanism further comprising a first bearing (27c) configured to support the plate (26) and a second bearing (27d) configured to support the barrel (23).

7. The pitch change mechanism as claimed in claim 6, wherein the first bearing (27c) is mounted between the plate (26) and the barrel (23) and/or the second bearing (27d) is mounted between the barrel (23) and the body (22).

8. The pitch change mechanism as claimed in one of claims 1 to 7, wherein the turbomachine further comprises a planetary mechanical reducer (50) comprising a sun gear (51), a ring gear (52) coaxial with the sun gear (51) and configured to rotationally drive the propeller and a series of planet gears (53) circumferentially distributed around the axis of rotation of the reduction gear (50) between the sun gear (51) and the ring gear (52), each planet gear being mounted on a planet carrier (54) which is fixed with respect to a stator part of the turbomachine, the element from among the plate (26) and the barrel (23) which is fixedly connected to the stator part of the turbomachine being configured to be mounted on the planet carrier (54).

9. The pitch change mechanism as claimed in one of claims 1 to 8, wherein a pitch of the propeller (13) is configured to be controlled by torque control of the electric machine (29).

10. The pitch change mechanism of a propeller (10) as claimed in one of claims 1 to 9, wherein the body (22) delimits a cavity (224) filled with hydraulic fluid, the pitch change mechanism further comprising:
- a barrel (23) housed in the cavity (224) of the body such as to be submerged in the hydraulic fluid;
- a set of cylinders formed inside the barrel (23), each cylinder housing a piston (24) translationally movable in the cylinder and comprising an intake hole (242) configured to receive hydraulic fluid coming from the cavity (224) and a discharge hole (232) configured to send hydraulic fluid to an actuator of the propeller; and
- an annular groove (223) formed in the body (22) in fluid communication with the discharge hole (232).

11. The pitch change mechanism as claimed in claim 10, wherein each cylinder further comprises a discharge valve (231) mounted on the discharge hole (232) and configured to block the circulation of the hydraulic fluid of the annular groove (223) towards the cylinder, the discharge valve (231) being mountable in the cylinder.

12. The pitch change mechanism as claimed in one of claims 10 and 11, wherein each cylinder further comprises an intake valve (241) mounted on the intake hole (242) and configured to block the circulation of the hydraulic fluid of the cylinder towards the cavity (224), the intake valve (241) being mountable near the sliding pad and/or in the cylinder.

13. The pitch change mechanism as claimed in one of claims 10 to 12, wherein the actuator (15) of the propeller comprises two chambers and the mechanism further comprises a hydraulic valve (14) configured to selectively put one of the chambers of the actuator in communication with the annular groove (223).

14. A turbomachine comprising a propeller (13) and a pitch change mechanism as claimed in one of claims 1 to 13 configured to actuate an actuator (15) which is mechanically connected to the propeller (13).

15. An aircraft comprising at least one turbomachine as claimed in claim 14 connected to the aircraft by way of a pylon.
